# EUROPEAN PATENT SPECIFICATION

(11) **EP 2 703 717 B1**
(45) Date of publication and mention of the grant of the patent: **18.05.2016**
(21) Application number: 12182733.1
(22) Date of filing: 03.09.2012
(51) Int. Cl.: F23L 7/00, F23J 15/00, F23J 15/06, F23L 15/04

(54) **Method of operating an oxy-fuel boiler system**
Verfahren zum Betrieb eines Sauerstoff-Brennstoff-Kesselsystems
Procédé de fonctionnement d'un système de chaudière à combustion d'oxygène

(43) Date of publication of application: 05.03.2014
(73) Proprietor: ALSTOM Technology Ltd, 5400 Baden (CH)
(72) Inventor: Stallmann, Olaf, 55270 Essenheim (DE); Ennenbach, Frank, 63303 Dreieich (DE); Britz, Christian, 65193 Wiesbaden (DE); Narjes, Jutta, 65830 Kriftel (DE); Weitzel, Markus, 55218 Ingelheim (DE)
(74) Representative: General Electric Technology GmbH

(56) References cited:
- EP-A1- 0 761 281
- WO-A1-99/40304
- WO-A1-2011/131837
- FR-A1- 2 872 566
- US-A1- 2003 097 840
- US-A1- 2009 293 782
- US-A1- 2012 174 624
- US-B1- 6 196 000

## Description

### Technical field

The present invention relates to an oxy-fuel boiler system and a method of operating the system. The present disclosure also relates an oxyfuel combustion power plant comprising such a system.

### Background

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed. One such process is the so called oxy-fuel process. In an oxy-fuel process a fuel, such as one of the fuels mentioned above, is combusted in the presence of a nitrogen-lean gas. Oxygen gas, which is provided by an oxygen gas source, is supplied to a boiler in which the oxygen gas oxidizes the fuel. In the oxyfuel combustion process a carbon dioxide rich flue gas is produced, which can be treated using various CO₂ capture technologies in order to reduce the emission of carbon dioxide into the atmosphere.

CO₂ capture often comprises cooling, or compression and cooling, of the flue gas to separate CO₂ in liquid or solid form from non-condensable flue gas components, such as N₂ and O₂.

After purification and separation of carbon dioxide, a carbon dioxide rich stream is.obtained and need to be handled, such as by storing and transportation in tanks (stationary or on a truck or ship), transporting via pipelines and/or pumping into the ground for prolonged (definitive) storage and mineralisation.

Different components used in an oxy-fuel process may not always be used to their full capacity. Components downstream of the boiler are designed in view of the output from the boiler. Also, components upstream of the boiler are designed in view of the input needed in the boiler. Some of the apparatuses used in an oxy-fuel process are thus oversized since the oxy-fuel process not always is operated at full capacity all the time.

There is always a need to improve the flexibility of an oxy-fuel process. It would be desirable to find new ways to lower overall energy consumption, scale down the size/capacity of the components and better utilize the components present in an oxy-fuel process.

US 6 196 000 discloses a boiler system and a method according to the pre-characterizing part of claims 1 and 8.

### Summary

By using heat energy from parts of a process and forward it to other parts where it is needed the overall energy consumption may be lowered. Also by using different heat exchanging systems depending on the load of a process increases the flexibility in the running of such a process. By, during periods of low load, accumulate oxygen, an important ingoing component for the combustion of fuel, the process may not need as high capacity oxygen gas supply as otherwise would be needed if it was to produce all oxygen needed during high load on the system. Thus, this presents an opportunity to decrease the capacity of the oxygen gas supply. Also, using heat energy available in the process the required energy input may be decreased and/or adjusted to periods of the day when the energy price is lower in order to save costs.

A combination of load dependent heat transfer systems results in a decreased overall energy consumption, decreased operational costs for the process and decreased scale of some apparatuses needed.

An object of the present invention is to provide a method of operating a boiler system according to claim 1.

According to one embodiment, the method further comprises: establishing wether the boiler system operates at a first load or at a second load, wherein the second load is a lower load than the first load, controlling the boiler system to operate in the evaporation mode when the boiler system operates at the first load, and controlling the boiler system to stop operation in the evaporation mode when the boiler system operates at the second load.

According to one embodiment, the method further comprises: establishing whether the boiler system operates at a third load or at a fourth load, wherein the fourth load is a lower load than the third load, controlling the boiler system to operate in the condensing mode when the boiler system operates at the fourth load, and
controlling the boiler system to stop operation in the condensing mode when the boiler system operates at the third load,
wherein a stock of liquid oxygen is built up when the boiler system operates at the fourth load.

According to one embodiment, the fourth load is a lower load than the first load.

According to one example, which does not form part of the invention, the method comprises controlling the boiler system to avoid, at least for a period of time, simultaneously operating in the evaporation mode and in the condensing mode,
wherein a stock of liquid oxygen is built up in the condensing mode when operating at the fourth load, and that said stock of liquid oxygen is evaporated in the evaporation mode for use in the boiler when operating at the first load, wherein the fourth load is a lower load than the first load.

According to one embodiment, the method comprises an intermediary heat transfer fluid which is utilized in the evaporation mode for transferring heat to the stream of liquid oxygen from the stream of carbon dioxide.

According to one embodiment, the method further comprises transferring, in the evaporation mode, heat directly to the liquid oxygen from the stream of carbon dioxide.

Another object of the present invention is to provide a boiler system according to claim 8.

Another object of the present invention is to provide an oxy-fuel Another object of the present invention is to provide an oxy-fuel combustion power plant comprising said boiler system.

### Brief description of the Drawings

Referring now to the figures, which are exemplary embodiments, and wherein the like elements are numbered alike:
Fig. 1 is a schematic view of a boiler system 1 in an oxy-fuel process, disclosing one embodiment a heat transfer system 46.
Fig. 2 is a schematic view of a boiler system 1 in an oxy-fuel process, disclosing another embodiment a heat transfer system 46.
Fig. 3 is a schematic view of a boiler system 1 in an oxy-fuel process, disclosing yet another embodiment a heat transfer system 46.

### Detailed description of Exemplary Embodiments

The present method establishes the load at which the boiler system operates. By providing limit values on the load for when the evaporation mode and the condensing mode, respectively, are to be active the method is switching between the modes based on a load value measured in the process during operation. The evaporation mode is to be active during a high load on the boiler system. The load on the boiler system is considered high when the load is at least 75% of maximum capacity of the boiler, i.e. 75-100%, preferably 95-100%. The condensation mode is to be active during a low load on the boiler system. The load on the boiler system is considered low when the load is below 75% of maximum capacity of the boiler, e.g. 0-74%, preferably 25-60%.

The load on the boiler system could be measured and controlled using the oxygen demand or flowrate to the boiler. Additionally, the operation may be influenced by a demand of emptying the O₂ buffering vessel of the present system, which vessel contains oxygen to be fed to the boiler. However, the operation is not necessarily measured and controlled only by the oxygen demand but also the operating point of the CO₂ compressor(s) in the gas processing unit. This operating point is indicating whether condensation of O₂ can be done. The load of big centrifugal compressors is measured typically by flow control. Below 75% load such machines are operated using gas recirculation to prevent damages to the equipment from surge conditions.

As an example, a low load on the boiler system involves a low O₂ demand from the boiler, but with the present method the CO₂ compressor may operate at >75% capacity and O₂ for storage is made available.

The limit values of the boiler system to operate in the evaporation mode are set as a first and a second load. The limit value for a first load is set to at least 75% of maximum capacity of the boiler, at which the boiler system activates and operates in the evaporation mode. The limit value for a second load is set to below 75% of maximum capacity of the boiler. At which the boiler system deactivates the evaporation mode.

The limit values of the boiler system to operate in the condensation mode are set as a third and a forth load. The limit value for a third load is set to at least 75% of maximum capacity of the boiler, at which the boiler system deactivates the condensation mode. The limit value for a forth load is set to below 75% of maximum capacity of the boiler, at which the boiler system activates and operates in the condensation mode.

The limit values for the first and third load may be different or the same. The limit values for the second and forth load may be different or the same.

The mode of operation of the boiler system is controlled by a controlling device, such as a computer, microprocessor or controller, which compares the value of a measured current load with the set limit values and then regulate the process accordingly.

In order to exemplify the use of the different operation modes, evaporation and condensation mode, an example of an embodiment of the present method of operation is given below. If the oxygen gas source 26 have a maximum production capacity of 80 kg/h of O₂ and the boiler 4 have a capacity during full operation (high load) to use 100 kg/h of O₂ but during low load only uses 50 kg/h. The boiler 4 is lacking 20 kg/h of O₂ during high load but during low load 30 kg/h of O₂ which is available is not needed. Thus by providing an oxygen storage unit, excess oxygen during periods of low load may be stored to be used when the load increases.

When the evaporation mode is in operation in the boiler system the heat transfer used in this mode may be done in different ways. Liquid oxygen may be provided from an oxygen gas source, which may be an air separation unit, via a heat exchanging device condensing an oxygen gas stream supplied within or outside the air separation unit, or from a liquid oxygen storage unit. The liquid oxygen may be evaporated using heat energy transferred from a stream of carbon dioxide of the gas processing unit. The heat energy may be transferred by using a heat exchanging medium which transfers the heat energy from e.g. a carbon dioxide stream in a carbon dioxide condenser by cooling and optionally condensing said carbon dioxide stream and forwarding the heat energy to the liquid oxygen and evaporating it into gaseous oxygen. The heat exchanging medium may be any medium useful for transferring heat energy. The heat exchanging medium may not need to be condensed and evaporated itself during the heat transfer. Another way to transfer the heat energy between the oxygen stream and the carbon dioxide stream could be to forward the liquid oxygen into a carbon dioxide condenser directly, generating evaporation of the liquid oxygen stream and cooling and optionally condensing the carbon dioxide stream in the carbon dioxide condenser. Yet another way could be to forward a part of a carbon dioxide stream from a carbon dioxide condenser in the gas processing unit to a heat exchanging unit in which heat energy is transferred from condensation of said carbon dioxide stream to evaporation of the liquid oxygen entering the heat exchanging unit. The gaseous oxygen then obtained is forwarded to the boiler for use in the combustion of fuel. The oxygen streams of the boiler system are controlled, e.g. in terms of temperature or flow. The liquid and/or gaseous oxygen streams in the boiler system is be forwarded by controlling the flow of oxygen in a per se known manner.

By the term "carbon dioxide rich" used throughout the application text is meant that the gas stream referred to contains at least 40 % by volume of carbon dioxide (CO₂).

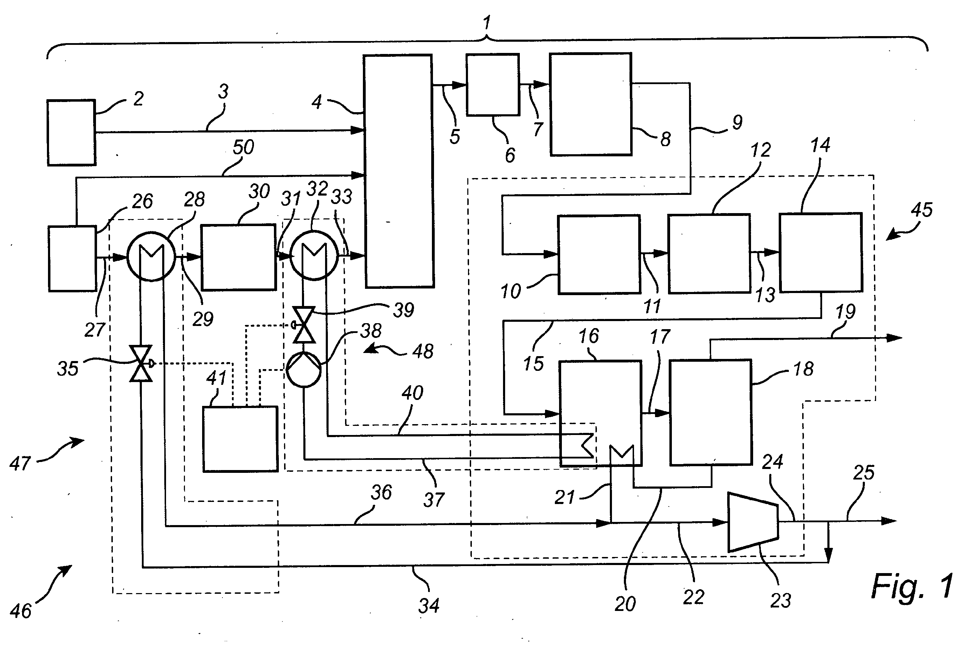

The heat transfer process and the system involved will now be disclosed more in detail with reference to Figs. 1-3. It is to be noted that not all streams or controlling means needed to operate an oxy-fuel process are disclosed in the figures. The Figures 1-3 are focusing on the main flow of the fuel becoming a CO₂ stream, which then is purified, cooled, separated and compressed but also on the provision of an additional flow of oxygen to the fuel combustion, which flow is dependent of fluctuations in process load, in order make the oxy-fuel process more flexible in terms of energy resource allocation, apparatus scaling and capacity.

Fig. 1 is a schematic representation of a boiler system 1, as seen from the side thereof. The boiler system 1 comprises, as main components, a boiler 4, being in this embodiment an oxy-fuel boiler, and a gas cleaning system 6. The gas cleaning system 6 comprises a particulate removal device, which may, for example, be a fabric filter or an electrostatic precipitator, and a sulphur dioxide removal system, which may be a wet scrubber.

A fuel, such as coal, oil, or peat, is contained in a fuel storage 2, and can be supplied to the boiler 4 via a supply stream 3. An oxygen gas source 26 is operative for providing oxygen gas in a manner which is known per se. The oxygen gas source 26 may be an air separation unit operative for separating oxygen gas from air, an oxygen separating membrane or any other source for providing oxygen gas to the boiler system 1. Oxygen in the form of a gas stream 50 from the oxygen gas source 26 is continuously, during operation of the boiler 4, directly fed into the boiler. In order to make the boiler system 1 more flexible an additional flow of oxygen is provided between the oxygen gas source 26 and the boiler 4. An oxygen storage unit 30, e.g. a tank, for storage of liquid oxygen is placed between the oxygen gas source 26 and the boiler 4. The produced oxygen gas to be feed to the boiler 4, comprises typically 90-99.9 vol.% oxygen, O₂. A re-circulation of flue gas (not shown), which contains carbon dioxide, to the boiler 4 is provided in the boiler system 1. The re-circulation of flue gas may be taken from stream 9. The re-circulation of flue gas and the oxygen gas may become mixed with each other to form a gas mixture containing typically about 20-50 % by volume of oxygen gas, the balance being mainly carbon dioxide and water vapour, upstream of the boiler 4. The boiler 4 is operative for combusting the fuel, which is supplied via the supply stream 3, in the presence of the oxygen gas. Oxygen gas is continuously during operation fed directly from oxygen gas source 26 to boiler 4 as a stream 50 but may also depending on the load on the boiler system 1 be supplied by streams 27, 29, 31, 33. The flow of oxygen of streams 50, 27, 29, 31 and 33 may be controlled by a controlling system which may e.g. comprise computer, micro processor, controller, valves, actuators and/or pumps, which system is not shown in the figures for the purpose of maintaining clarity of the illustration. Controlling the flow of oxygen is done in a per se known manner. A part of the oxygen produced in the oxygen gas source 26 may not directly fed into the boiler 4. When the boiler 4 is not operating at full capacity i.e. during a low load on the boiler system, the oxygen gas source 26 may still be operating at full capacity and forwarding the oxygen not needed in the boiler 4 via a stream 27, 29 to an oxygen storage unit 30. Thus, the excess part of oxygen produced in the oxygen gas source 26 is stored in the oxygen storage unit 30. When the load on the boiler system 1 then increases and the boiler 4 operates at full capacity the oxygen stored in the oxygen storage may be used and fed into the boiler 4 via streams 31, 33. The excess of oxygen gas during low load on the boiler system 1 is forwarded via stream 27 to a heat exchanging unit 28, wherein the oxygen gas is condensed and forwarded as stream 29 into the oxygen storage unit 30. During high load on the boiler system 1 the stored liquid oxygen is forwarded via stream 31 through a heat exchanging unit which vaporizes the oxygen and the oxygen gas is forwarded in stream 33 into the boiler 4.

A stream 5 is operative for forwarding carbon dioxide rich flue gas generated in the boiler 4 to the gas cleaning system 6. By "carbon dioxide rich flue gas" is meant that the flue gas leaving the boiler 4 via the stream 5 will contain at least 40 % by volume of carbon dioxide, CO₂. Often more than 50% by volume of the flue gas leaving the boiler 4 will be carbon dioxide. Typically, the flue gas leaving boiler 4 will contain 50-80 % by volume of carbon dioxide. The balance of the "carbon dioxide rich flue gas" will be about 15-40% by volume of water vapour (H₂O)**,** 2-7 % by volume of oxygen (O₂), since a slight oxygen excess is often preferred in the boiler 4, and totally about 0-10 % by volume of other gases, including mainly nitrogen (N₂) and argon (Ar), since some leakage of air can seldom be completely avoided.

The carbon dioxide rich flue gas generated in the boiler 4 may typically comprise contaminants in the form of, for example, dust particles, hydrochloric acid, HCl, sulphur oxides, SOₓ, and heavy metals, including mercury, Hg, that should be removed, at least partly, from the carbon dioxide rich flue gas prior to disposing of the carbon dioxide.

The gas cleaning system 6 removes in different steps most of the dust particles from the carbon dioxide rich flue gas and also sulphur dioxide, SO₂, and other acid gases from the carbon dioxide rich flue gas.

An at least partly cleaned carbon dioxide rich flue gas is forwarded from cleaning system 6 via a stream 7 to a flue gas condenser 8. From the flue gas condenser 8 via a stream 9 the flue gas is forwarded to a gas processing unit (GPU) 45 in the form of a gas compression and purification unit of the boiler system 1. In the GPU 45 the cleaned carbon dioxide rich flue gas is further cleaned and is compressed for disposal. Compressed carbon dioxide hence leaves the GPU 45 via a stream 24 and is transported away for disposal, which is sometimes referred to as "CO₂ sequestration".

The cleaned carbon dioxide rich flue gas enters the GPU 45 via the stream 9 and is introduced into the flue gas compression unit 10, optionally comprising intercooling and separation steps. A stream 11 forwards the compressed gas from the flue gas compression unit 10 to a trace substance removal unit 12, which removes any trace components still present in the stream, e.g. by adsorption or absorption to remove mercury and other substances.

The GPU 45 further comprises a drier unit 14, e.g. an adsorption drier, operative for removing at least a portion of the content of water vapour of the flue gas. The drier unit 14 may comprise more than one drier.

The drier unit 14 is arranged downstream of trace substance removal unit 12 connected by stream 13, but upstream of a CO₂ condenser unit 16 connected by stream 15.

The adsorption drier contains an adsorbent or desiccant capable of adsorbing water molecules from a gas stream. The desiccant may, for example, be silica gel, calcium sulfate, calcium chloride, montmorillonite clay, molecular sieves, or another material that is, as such, known for its use as a desiccant. The molecular sieves have a pore size suitable for adsorption of water, e.g. molecular sieves having a pore size in the range of 3 to 5 A.

The GPU 45 may optionally comprise a flue gas economizer (not shown) arranged between the trace substance removal unit 12 and the drier unit 14 and configured to recover heat from the flue gas stream leaving the trace substance removal unit using, e.g. boiler feed water.

The cleaned carbon dioxide rich flue gas is forwarded via a stream 15 from drier unit 14 to a CO₂ condenser unit 16, in which the gas is cooled in a heat-exchanger, often called a cold-box, to cause liquefaction of the carbon dioxide such that the carbon dioxide can be separated from gases, such as nitrogen, that are not liquefied at the same temperature as carbon dioxide. The liquefied carbon dioxide is forwarded to a CO₂ separation unit 18 by a stream 17. For example, a heat exchanger, also called a cold box, of the CO₂ separation unit 16 may often be made from aluminium. Residual water may cause formation of ice in the cold box, eventually resulting in problems with reduced cooling capacity and clogging of the heat exchanger. By providing a drier unit 14 upstream of the CO₂ separation unit 18, such problems are avoided, or at least minimized.

Furthermore, the GPU 45 may comprise a high pressure compression unit 23 arranged downstream, as seen with respect to the transport direction of the carbon dioxide, of the CO₂ separation unit 18, and comprising one or more compression stages for compressing the carbon dioxide to a suitable pressure for a following sequestration. After compression of the gas in the high pressure compression unit 23, the compressed carbon dioxide, which may be in a supercritical or subcritical liquid state, may be forwarded, via stream 24, for further use. The compressor unit 23 comprises at least one compressor having at least one, and typically two to ten compression stages for compressing the liquefied carbon dioxide. Each compression stage could be arranged as a separate unit. As an alternative, several compression stages could be operated by a common drive shaft. The high pressure compression unit 23 may be run under subcritical conditions or supercritical conditions.

A heat transfer system 46 comprises two heat exchanging systems 47, 48 which operate at different modes. The first heat exchanging system 48 is active during high load in the boiler system 1.

In the first heat exchanging system 48, a stream 31 comprising liquid oxygen is to be evaporated before entry as an evaporated stream 33 into the boiler 4. Stream 31 is evaporated in a heat exchanger 32, in which heat energy is transferred and evaporates the oxygen, resulting in the evaporated stream 33 which is forwarded into the boiler 4. The heat energy transferred in the heat exchanger 32 is recovered from a heat exchanging media circulated between heat exchanger 32 and the CO₂ condenser unit 16. The heat exchanging media is retrieves heat energy in the CO₂ condenser unit 16 by aiding the condensation of the CO₂ in stream 15, which than is transferred to the heat exchanger 32 and there aids the evaporation of the liquid oxygen stream 31. The heat exchanging media is forwarded using a pumping device 38. The pumping device 38 and a regulating device 39, e.g. a valve, are used to control the flow of the second heat exchanging system 48 using a controlling device 41.

The second heat exchanging system 47 is active during low load in the boiler system 1. In the second heat exchanging system 47 a stream 34 is taken from outgoing stream 24 comprising compressed CO₂. The stream 34 is forwarded to a heat exchanger 28. Into the heat exchanger is forwarded stream 34 and stream 27. Heat energy from stream 34 comprising compressed CO₂ is used do condense the stream 27, resulting in an evaporated CO₂ stream 36 which is forwarded back to stream 21. The condensed stream 29 is then forwarded into an oxygen storage unit 30. The flow of the stream 34 is controlled by a controlling device 41 using a valve 35.

The second heat exchanging system 47 is active during low load in the boiler system 1.

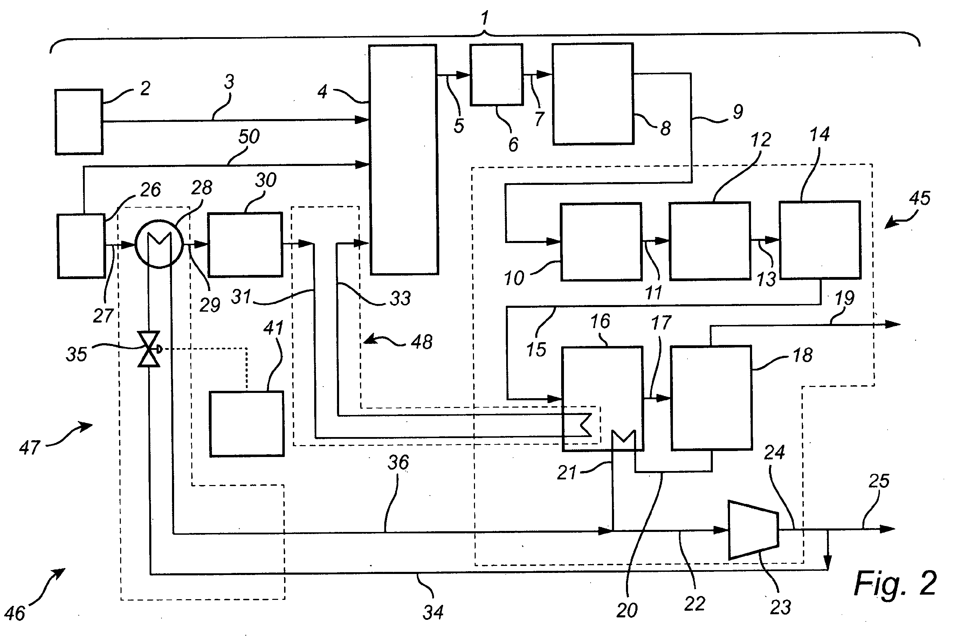

Fig. 2 is a schematic representation of a boiler system 1, as seen from the side thereof. The boiler system 1 comprises the same features as in previously mentioned Fig.1 apart from the construction of the heat transfer system 46.

The heat transfer system 46 comprises two heat exchanging systems 47, 48 which operate at different modes. The second heat exchanging system 47 is the same as disclosed for Fig.1 above.

In the first heat exchanging system 48, a stream 31 comprising liquid oxygen is to be evaporated before entry as an evaporated stream 33 into the boiler 4. Stream 31 is forwarded to the CO₂ condenser unit 16, in which heat energy is transferred and evaporates the oxygen, resulting in the evaporated stream 33 which is forwarded into the boiler 4. The heat energy transferred to the oxygen stream 31 is recovered from the condensation reaction taking place in CO₂ condenser unit 16.

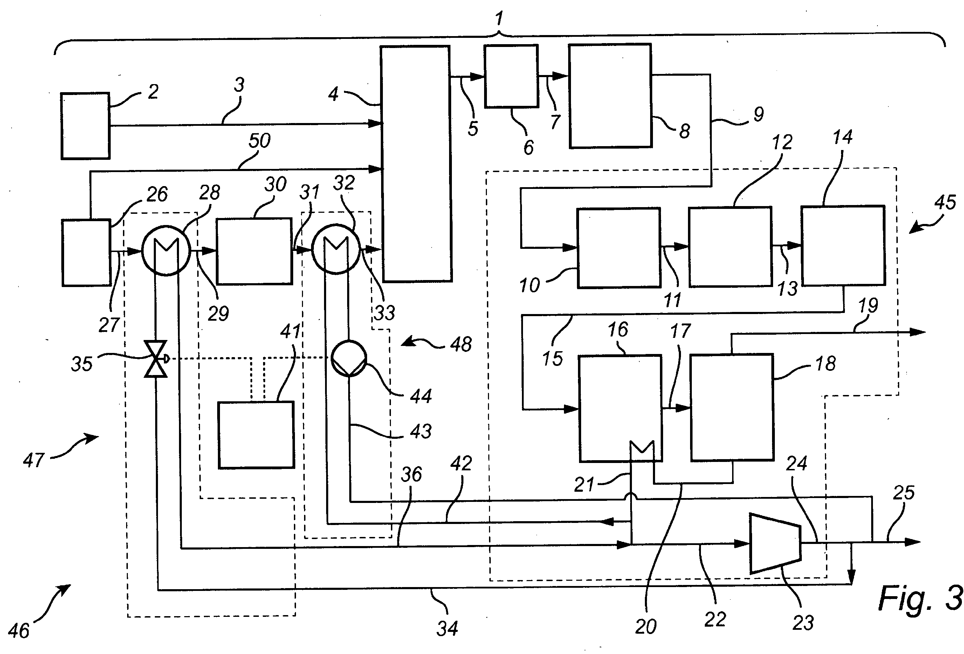

Fig. 3 is a schematic representation of a boiler system 1, as seen from the side thereof. The boiler system 1 comprises the same features as in previously mentioned Fig.1 and 2 apart from the construction of the heat transfer system 46.

The heat transfer system 46 comprises two heat exchanging systems 47, 48 which operate at different modes. The second heat exchanging system 47 is the same as disclosed for Fig. 1 above.

In the first heat exchanging system 48, a stream 31 comprising liquid oxygen is to be evaporated before entry as an evaporated stream 33 into the boiler 4. Stream 31 is evaporated in a heat exchanger 32, in which heat energy is transferred and evaporates the oxygen, resulting in the evaporated stream 33 which is forwarded into the boiler 4. The heat energy transferred in the heat exchanger 32 is recovered from condensation of a CO₂ containing stream 42 taken from stream 21 leaving the CO₂ condenser unit. The condensed CO₂ stream 43 leaving the heat exchanger 32 is forwarded to and added to stream 24 leaving the compressor unit 23, forming stream 25 to be forwarded for further use. The condensed CO₂ stream 43 is forwarded by use of a pumping device 44 which is controlled by a controlling device 41.

The load on the boiler system 1 is not always constant. Thus, during periods of low load, e.g. during night time, the boiler system 1 is using a heat exchanging system 47. During periods of low load, e.g. below 75%, the compression unit 23 work partly on recirculation. Therefore a surplus of cold energy may be extracted out of the stream 24 coming from the compression unit 23 or any recirculation streams from it. The surplus of cold energy may then be used to liquefy oxygen gas produced in an oxygen gas source 26. Also, during periods of low load part of the formed liquefied oxygen is stored in an oxygen storage unit 30. The stored oxygen may then be used when the load increases on the boiler system 1. During periods of high load, e.g. during day time (normal working hours), the boiler system 1 is using a heat transfer system 48. Heat energy is transferred to evaporate liquid oxygen stream 31 before entering the boiler 4 as stream 33 is performed, using streams connected with either the CO₂ condenser unit 16 or the CO₂ compression unit 23.

The difference in load on the boiler system 1 triggers the use of either the first the heat exchanger system 48 or the second heat exchanger systems 47. A measuring unit could be connected to the boiler 4, measuring the load on the boiler 4. When the load on the boiler 4 reaches a specified value the heat transfer system 46 changes mode from the first heat exchanger system 48 to the second heat exchanger system 47, or the other way around. When the load is high, e.g. at least a load of at least 75% on the boiler 4, the first heat exchanger system 48 is activated to facilitate more oxygen being fed into the boiler 4. When the load is lower, e.g. below a load of 75% on the boiler 4, the second heat exchanger system 47 is activated to facilitate oxygen being stored in oxygen storage unit 30, which oxygen will be fed into the boiler 4 when the load increases and the first the heat exchanger system 48 is activated.

This combination of heat transfer systems results in a decreased overall energy consumption. The use of the surplus of cold energy for the liquefaction of oxygen also influences the design of the oxygen gas source 26, since it may be scaled down. The design of CO₂ condenser unit 16 may also be influenced due to the evaporation energy transferred from the oxygen stream, since heat energy needed for the condensing of CO₂ may be taken from other parts of the process. Thus, by using heat energy from other parts of the process the overall energy consumption is decreased. Also by adapting the boiler system process to different load cycles the process may be optimized in view of energy consumption.

It will be appreciated that numerous variants of the embodiments described above are possible within the scope of the appended claims.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of operating a boiler system (1) comprising an oxyfuel boiler (4) in which an oxygen stream (33, 50) and a fuel stream (3) are combusted to generate a stream (5) of flue gas, an oxygen gas source (26) and a liquid oxygen storage unit (30) producing the stream of oxygen for the boiler, and a gas processing unit (45) for cleaning and compressing at least a portion of the stream (5) of flue gas generated in the boiler for producing a stream (25) of pressurized fluid comprising carbon dioxide, the method comprising:
operating the boiler system (1), at least for a period of time, in an evaporation mode, in which a stream of oxygen in liquid form from the liquid oxygen storage unit (30) is evaporated prior to being introduced in the boiler (4) by transferring heat energy to the stream of liquid oxygen from a first stream of carbon dioxide of the gas processing unit (45),
operating the boiler system (1), at least for a period of time, in a condensing mode, in which a stream (27) of gaseous oxygen from the oxygen gas source (26) is condensed prior to being forwarded to a liquid oxygen storage unit (30) by transferring heat energy from the stream (27) of gaseous oxygen to a second stream of carbon dioxide of the gas processing unit (45),
**characterized by** switching between the evaporation mode and the condensation mode based on a load value measured on the boiler system (1) during operation,
wherein the stream (25) of pressurized fluid comprising carbon dioxide is compressed in a compressor unit (23) for compressing the carbon dioxide to a suitable pressure for a following sequestration,
wherein during operation in condensation mode the compression unit (23) works partly on recirculation,
a surplus of cold energy is extracted out of a stream (24) coming from the compression unit (23) and is used to liquefy oxygen gas produced in the oxygen gas source (26).

2. The method according to claim 1, further comprising transferring, in the condensing mode, heat energy from the gaseous oxygen to the second stream of carbon dioxide which has the form of a stream (34) of pressurized carbon dioxide from the gas processing unit (45), wherein the pressurized carbon dioxide is made to expand before the transfer of heat energy.

3. A method according to any one of claims 1-2, further comprising:
establishing whether the boiler system (1) operates at a first load or at a second load, wherein the second load is a lower load than the first load,
controlling the boiler system (1) to operate in the evaporation mode when the boiler system operates at the first load, and controlling the boiler system (1) to stop operation in the evaporation mode when the boiler system (1) operates at the second load.

4. The method according to any one of claims 1-3, further comprising:
establishing whether the boiler system (1) operates at a third load or at a fourth load, wherein the fourth load is a lower load than the third load,
controlling the boiler system (1) to operate in the condensing mode when the boiler system operates at the fourth load, and
controlling the boiler system (1) to stop operation in the condensing mode when the boiler system operates at the third load,
wherein a stock of liquid oxygen is built up when the boiler system (1) operates at the fourth load.

5. The method according to claims 3 and 4, wherein the fourth load is a lower load than the first load.

6. The method according to any one of claims 1-5, wherein an intermediary heat transfer fluid is utilized in the evaporation mode for transferring heat to the stream of liquid oxygen from the stream of carbon dioxide.

7. The method according to any one of claims 1-5, further comprising transferring, in the evaporation mode, heat directly to the liquid oxygen from the stream of carbon dioxide.

8. A boiler system (1) comprising
an oxyfuel boiler (4) in which a stream of oxygen and a fuel are combusted to generate a stream (5) of flue gas,
an oxygen gas source (26) producing the stream of oxygen for the boiler,
a liquid oxygen storage unit (30),
a gas cleaning system (6) for cleaning at least a portion of flue gas generated in the boiler (4),
a flue gas condenser (8) for condensing the cleaned flue gas,
a gas processing unit (45) for further cleaning and compressing the flue gas for producing a stream (25) of pressurized fluid comprising carbon dioxide, said boiler system (1) further comprising:
a first heat exchanging system (48), operable at least for a period of time in an evaporation mode, in which a stream of oxygen in liquid form from the liquid oxygen storage unit (30) is evaporated prior to being introduced in the boiler (4) by transferring heat energy to the stream of liquid oxygen from a first stream of carbon dioxide of the gas processing unit (45),
a second heat exchanging system (47) operable at least for a period of time in a condensing mode, in which a stream (27) of gaseous oxygen from the oxygen gas source (26) is condensed prior to being forwarded to the liquid oxygen storage unit (30) by transferring heat energy from the stream (27) of gaseous oxygen to a second stream of carbon dioxide of the gas processing unit (45), **characterized in that**,
a controlling device (41) controls the heat transfer systems (47,48) to be operable in the evaporation mode or condensation mode, respectively, based on a measured load on the boiler system (1),
the gas processing unit (45) further comprising a compressor unit (23) for compressing the fluid comprising carbon dioxide to a suitable pressure for a following sequestration, wherein
the second heat exchanging system (47) comprises a heat exchanger (28) in which a compressed liquid carbon dioxide stream (34) from downstream of the compressor unit (23) is evaporated by heat energy transferred from condensation of a gaseous oxygen stream (27) from the oxygen gas source (26) and is then fed upstream of the compressor unit (23).

9. An oxy-fuel combustion power plant comprising the system according to claim 8.

## Patentansprüche

1. Verfahren zum Betrieb eines Kesselsystems (1), welches einen Sauerstoff-Brennstoff-Kessel (4), in welchem ein Sauerstoffstrom (33, 50) und ein Brennstoffstrom (3) verbrannt werden, um einen Rauchgasstrom (5) zu erzeugen, eine Sauerstoffgasquelle (26) und eine Speichereinheit für flüssigen Sauerstoff (30), welche den Sauerstoffstrom für den Kessel erzeugen, und eine Gasverarbeitungseinheit (45) zum Reinigen und Komprimieren mindestens eines Teils des Rauchgasstroms (5), der in dem Kessel erzeugt wird, zum Erzeugen eines Stromes (25) von druckbeaufschlagtem Fluid, welches Kohlendioxid aufweist, aufweist, wobei das Verfahren Folgendes aufweist:
Betreiben des Kesselsystems (1), mindestens für einen Zeitraum, in einem Verdampfungsmodus, in welchem ein Strom von Sauerstoff in flüssiger Form von der Speichereinheit für flüssigen Sauerstoff (30) verdampft wird, bevor er in den Kessel (4) eingeleitet wird, indem Wärmeenergie von einem ersten Kohlendioxidstrom der Gasverarbeitungseinheit (45) auf den Strom von flüssigem Sauerstoff übertragen wird,
Betreiben des Kesselsystems (1), mindestens für einen Zeitraum, in einem Kondensationsmodus, in welchem ein Strom (27) von gasförmigem Sauerstoff von der Sauerstoffgasquelle (26) kondensiert wird, bevor er an eine Speichereinheit für flüssigen Sauerstoff (30) weitergeleitet wird, indem Wärmeenergie von dem Strom (27) von gasförmigem Sauerstoff auf einen zweiten Kohlendioxidstrom der Gasverarbeitungseinheit (45) übertragen wird,
**gekennzeichnet durch** das Schalten zwischen dem Verdampfungsmodus und dem Kondensationsmodus auf der Grundlage eines Lastwerts, der während des Betriebes an dem Kesselsystem (1) gemessen wird,
wobei der Strom (25) von druckbeaufschlagtem Fluid, der Kohlendioxid aufweist, in einer Kompressoreinheit (23) komprimiert wird, um das Kohlendioxid auf einen geeigneten Druck für eine anschließende Abscheidung zu komprimieren,
wobei, während des Betriebes im Kondensationsmodus, die Kompressionseinheit (23) teilweise mit Rückführung arbeitet,
ein Überschuss an Kälteenergie aus einem Strom (24) extrahiert wird, der von der Kompressionseinheit (23) kommt, und zum Verflüssigen des Sauerstoffgases verwendet wird, das in der Sauerstoffgasquelle (26) erzeugt wird.

2. Verfahren nach Anspruch 1, welches ferner das Übertragen, im Kondensationsmodus, von Wärmeenergie von dem gasförmigen Sauerstoff auf den zweiten Kohlendioxidstrom, welcher die Form eines Stromes (34) von druckbeaufschlagtem Kohlendioxid von der Gasverarbeitungseinheit (45) aufweist, aufweist, wobei das druckbeaufschlagte Kohlendioxid vor der Übertragung der Wärmeenergie expandiert wird.

3. Verfahren nach einem der Ansprüche 1-2, welches ferner Folgendes aufweist:
Feststellen, ob das Kesselsystem (1) mit einer ersten Last oder mit einer zweiten Last arbeitet, wobei die zweite Last eine geringere Last als die erste Last ist,
Steuern des Kesselsystems (1) zum Betrieb im Verdampfungsmodus, wenn das Kesselsystem mit der ersten Last arbeitet, und
Steuern des Kesselsystems (1) zum Stoppen des Betriebs im Verdampfungsmodus, wenn das Kesselsystem (1) mit der zweiten Last arbeitet.

4. Verfahren nach einem der Ansprüche 1-3, welches ferner Folgendes aufweist:
Feststellen, ob das Kesselsystem (1) mit einer dritten Last oder mit einer vierten Last arbeitet, wobei die vierte Last eine geringere Last als die dritte Last ist,
Steuern des Kesselsystems (1) zum Betrieb im Kondensationsmodus, wenn das Kesselsystem mit der vierten Last arbeitet, und
Steuern des Kesselsystems (1) zum Stoppen des Betriebs im Kondensationsmodus, wenn das Kesselsystem mit der dritten Last arbeitet,
wobei ein Vorrat an flüssigem Sauerstoff aufgebaut wird, wenn das Kesselsystem (1) mit der vierten Last arbeitet.

5. Verfahren nach Anspruch 3 und 4, wobei die vierte Last eine geringere Last als die erste Last ist.

6. Verfahren nach einem der Ansprüche 1-5, wobei im Verdampfungsmodus ein intermediäres Wärmeträgerfluid genutzt wird, um Wärme von dem Kohlendioxidstrom auf den Strom von flüssigem Sauerstoff zu übertragen.

7. Verfahren nach einem der Ansprüche 1-5, welches ferner, im Verdampfungsmodus, das Übertragen von Wärme direkt von dem Kohlendioxidstrom auf den flüssigen Sauerstoff aufweist.

8. Kesselsystem (1), welches Folgendes aufweist:
einen Sauerstoff-Brennstoff-Kessel (4), in welchem ein Sauerstoffstrom und ein Brennstoff verbrannt werden, um einen Rauchgasstrom (5) zu erzeugen,
eine Sauerstoffgasquelle (26), welche den Sauerstoffstrom für den Kessel erzeugt,
eine Speichereinheit für flüssigen Sauerstoff (30),
ein Gasreinigungssystem (6) zum Reinigen mindestens eines Teils des im Kessel (4) erzeugten Rauchgases,
einen Rauchgaskondensator (8) zum Kondensieren des gereinigten Rauchgases,
eine Gasverarbeitungseinheit (45) zum weiteren Reinigen und Komprimieren des Rauchgases zum Erzeugen eines Stroms (25) von druckbeaufschlagtem Fluid, welches Kohlendioxid aufweist, wobei das Kesselsystem (1) ferner Folgendes aufweist:
ein erstes Wärmeaustauschsystem (48), das mindestens für einen Zeitraum in einem Verdampfungsmodus betriebsfähig ist, in welchem ein Strom von Sauerstoff in flüssiger Form von der Speichereinheit für flüssigen Sauerstoff (30) verdampft wird, bevor er in den Kessel (4) eingeleitet wird, indem Wärmeenergie von einem ersten Kohlendioxidstrom der Gasverarbeitungseinheit (45) auf den Strom von flüssigem Sauerstoff übertragen wird,
ein zweites Wärmeaustauschsystem (47), das mindestens für einen Zeitraum in einem Kondensationsmodus betriebsfähig ist, in welchem ein Strom (27) von gasförmigem Sauerstoff von der Sauerstoffgasquelle (26) kondensiert wird, bevor er an die Speichereinheit für flüssigen Sauerstoff (30) weitergeleitet wird, indem Wärmeenergie von dem Strom (27) von gasförmigem Sauerstoff auf einen zweiten Kohlendioxidstrom der Gasverarbeitungseinheit (45) übertragen wird,
**dadurch gekennzeichnet, dass**
ein Steuergerät (41) die Wärmeübertragungssysteme (47, 48) derart steuert, dass sie im Verdampfungsmodus bzw. Kondensationsmodus betriebsfähig sind, und zwar basierend auf einer gemessenen Last an dem Kesselsystem (1),
wobei die Gasverarbeitungseinheit (45) ferner eine Kompressoreinheit (23) zum Komprimieren des Fluids, welches Kohlendioxid aufweist, auf einen geeigneten Druck für eine anschließende Abscheidung aufweist,
wobei das zweite Wärmeaustauschsystem (47) einen Wärmetauscher (28) aufweist, in welchem ein komprimierter flüssiger Kohlendioxidstrom (34) von stromabwärts von der Kompressoreinheit (23) durch Wärmenergie verdampft wird, die von der Kondensation eines gasförmigen Sauerstoffstroms (27) von der Sauerstoffgasquelle (26) übertragen wurde, und dann stromaufwärts von der Kompressoreinheit (23) eingespeist wird.

9. Sauerstoff-Brennstoff-Verbrennungskraftwerk, welches das System nach Anspruch 8 aufweist.

## Revendications

1. Procédé de fonctionnement d'un système chaudière (1) comprenant une chaudière à oxygaz (4) dans laquelle un flux (33, 50) d' oxygène et un flux (3) de combustible sont brûlés pour générer un flux (5) de gaz effluent, une source (26) de gaz oxygène et une unité (30) de stockage d'oxygène liquide produisant le flux d'oxygène pour la chaudière et une unité (45) de traitement de gaz pour la purification et la compression d'au moins une partie du flux (5) de gaz effluent généré dans la chaudière pour la production d'un flux (25) de fluide sous pression comprenant du dioxyde de carbone, le procédé comprenant :
le fonctionnement du système chaudière (1), au moins pendant une certaine durée, dans un mode évaporation, dans lequel un flux d'oxygène sous forme liquide provenant de l'unité (30) de stockage d'oxygène liquide est évaporé avant d'être introduit dans la chaudière (4) par transfert d'énergie thermique d'un premier flux de dioxyde de carbone de l'unité (45) de traitement de gaz au flux d'oxygène liquide,
le fonctionnement du système chaudière (1), au moins pendant une certaine durée, dans un mode condensation, dans lequel un flux (27) d'oxygène gazeux provenant de la source (26) de gaz oxygène est condensé avant d'être transmis à une unité (30) de stockage d'oxygène liquide par transfert d'énergie thermique du flux (27) d' oxygène gazeux à un second flux de dioxyde de carbone de l'unité (45) de traitement de gaz, **caractérisé par** la commutation entre le mode évaporation et le mode condensation sur la base d'une valeur de charge mesurée sur le système chaudière (1) pendant le fonctionnement,
dans lequel le flux (25) de fluide sous pression comprenant du dioxyde de carbone est comprimé dans une unité compresseur (23) pour la compression du dioxyde de carbone à une pression appropriée pour une séquestration subséquente,
dans lequel pendant le fonctionnement en mode condensation l'unité de compression (23) travaille en partie en recirculation,
un surplus d' énergie froide est extrait d'un flux (24) sortant de l'unité de compression (23) et est utilisé pour liquéfier le gaz oxygène produit dans la source (26) de gaz oxygène.

2. Procédé selon la revendication 1, comprenant en outre le transfert, en mode condensation, d'énergie thermique de l'oxygène gazeux au second flux de dioxyde de carbone qui a la forme d'un flux (34) de dioxyde de carbone sous pression provenant de l'unité (45) de traitement de gaz, dans lequel le dioxyde de carbone sous pression est amené à se détendre avant le transfert d'énergie thermique.

3. Procédé selon l'une quelconque des revendications 1-2, comprenant en outre :
le fait d'établir si le système chaudière (1) fonctionne à une première charge ou à une deuxième charge, la deuxième charge étant une charge inférieure à la première charge,
la commande du système chaudière (1) pour fonctionner en mode évaporation lorsque le système chaudière fonctionne à la première charge et la commande du système chaudière (1) pour arrêter le fonctionnement en mode évaporation lorsque le système chaudière (1) fonctionne à la deuxième charge.

4. Procédé selon l'une quelconque des revendications 1-3, comprenant en outre :
le fait d'établir si le système chaudière (1) fonctionne à une troisième charge ou à une quatrième charge, la quatrième charge étant une charge inférieure à la troisième charge,
la commande du système chaudière (1) pour fonctionner en mode condensation lorsque le système chaudière fonctionne à la quatrième charge et
la commande du système chaudière (1) pour arrêter le fonctionnement en mode condensation lorsque le système chaudière fonctionne à la troisième charge, dans lequel un stock d'oxygène liquide est accumulé lorsque le système chaudière (1) fonctionne à la quatrième charge.

5. Procédé selon les revendications 3 et 4, dans lequel la quatrième charge est une charge inférieure à la première charge.

6. Procédé selon l'une quelconque des revendications 1-5, dans lequel un fluide caloporteur intermédiaire est utilisé en mode évaporation pour le transfert de chaleur du flux de dioxyde de carbone au flux d'oxygène liquide.

7. Procédé selon l'une quelconque des revendications 1-5, comprenant en outre le transfert, en mode évaporation, de chaleur directement du flux de dioxyde de carbone au flux d'oxygène liquide.

8. Système chaudière (1) comprenant :
une chaudière à oxygaz (4) dans laquelle un flux d'oxygène et un combustible sont brûlés pour générer un flux (5) de gaz effluent,
une source (26) de gaz oxygène produisant le flux d'oxygène pour la chaudière,
une unité (30) de stockage d'oxygène liquide,
un système (6) de purification de gaz pour la purification d'au moins une partie du gaz effluent généré dans la chaudière (4),
un condenseur (8) de gaz effluent pour la condensation du gaz effluent purifié,
une unité (45) de traitement de gaz pour la purification supplémentaire et la compression du gaz effluent pour la production d'un flux (25) de fluide sous pression comprenant du dioxyde de carbone,
ledit système chaudière (1) comprenant en outre :
un premier système (48) d'échange de chaleur, pouvant fonctionner au moins pendant une certaine durée dans un mode évaporation, dans lequel un flux d'oxygène sous forme liquide provenant de l'unité (30) de stockage d'oxygène liquide est évaporé avant d'être introduit dans la chaudière (4) par transfert d'énergie thermique d'un premier flux de dioxyde de carbone de l'unité (45) de traitement de gaz au flux d'oxygène liquide,
un second système (47) d'échange de chaleur pouvant fonctionner au moins pendant une certaine durée dans un mode condensation, dans lequel un flux (27) d'oxygène gazeux provenant de la source (26) de gaz oxygène est condensé avant d'être transmis à l'unité (30) de stockage d'oxygène liquide par transfert d'énergie thermique du flux (27) d'oxygène gazeux à un second flux de dioxyde de carbone de l'unité (45) de traitement de gaz,
**caractérisé en ce que**,
un dispositif de commande (41) commande les systèmes (47, 48) de transfert de chaleur pour qu'ils puissent fonctionner en mode évaporation ou en mode condensation, respectivement, sur la base d'une charge mesurée sur le système chaudière (1),
l'unité (45) de traitement de gaz comprenant en outre une unité compresseur (23) pour la compression du fluide comprenant du dioxyde de carbone à une pression appropriée pour une séquestration subséquente, dans lequel
le second système (47) d'échange de chaleur comprend un échangeur de chaleur (28) dans lequel un flux (34) de dioxyde de carbone liquide comprimé provenant de l'aval de l'unité compresseur (23) est évaporé par de l'énergie thermique transférée à partir de la condensation d'un flux (27) d'oxygène gazeux provenant de la source (26) de gaz oxygène et est ensuite introduit en amont de l'unité compresseur (23).

9. Centrale électrique à combustion d'oxygaz comprenant le système selon la revendication 8.
